(19) **Europäisches Patentamt / European Patent Office / Office européen des brevets**

(11) **EP 1 340 780 B1**

(12) **EUROPEAN PATENT SPECIFICATION**

(45) Date of publication and mention of the grant of the patent:
**21.07.2010 Bulletin 2010/29**

(51) Int Cl.:
*C07F 5/02* (2006.01)     *C07F 17/00* (2006.01)
*C08G 65/12* (2006.01)     *C08G 65/26* (2006.01)

(21) Application number: **01972596.9**

(22) Date of filing: **28.09.2001**

(86) International application number:
**PCT/JP2001/008556**

(87) International publication number:
**WO 2002/026868 (04.04.2002 Gazette 2002/12)**

(54) **USE OF SELECTED METAL CATALYSTS FOR RING-OPENING POLYMERIZATION OF EPOXIDES**

VERWENDUNG BESTIMMTER METALLKATALYSATOREN FÜR DIE RINGÖFFNENDE POLYMERISATION VON EPOXIDEN

UTILISATION DES CATALYSEURS METALLIQUES CERTAINS POUR LA POLYMERISATION AVEC OUVERTURE DE CYCLES D'EPOXIDES

(84) Designated Contracting States:
**DE**

(30) Priority: **28.09.2000 JP 2000297413**

(43) Date of publication of application:
**03.09.2003 Bulletin 2003/36**

(73) Proprietor: **Sanyo Chemical Industries, Ltd.
Kyoto-shi,
Kyoto 605-0995 (JP)**

(72) Inventors:
- **SAKURAI, Yoko,
SANYO CHEM. IND., LTD
Kyoto-shi, Kyoto 605-0995 (JP)**
- **SATAKE, Munekazu,
SANYO CHEMICAL INDUSTRIES, LTD
Kyoto-shi,
Kyoto 605-0995 (JP)**

(74) Representative: **Brehm, Hans-Peter
Hansmann & Vogeser
Patent- und Rechtsanwälte
Maximilianstrasse 4b
82319 Starnberg (DE)**

(56) References cited:
| | |
|---|---|
| EP-A1- 0 791 600 | EP-A2- 1 024 144 |
| WO-A1-00/46171 | WO-A1-99/19062 |
| JP-A- 10 326 269 | JP-A- 11 302 352 |
| JP-A- 11 315 138 | JP-A- 11 335 459 |
| JP-A- 2000 017 040 | JP-A- 2000 086 755 |

- GOLD H J: "Bis(cyclopentadientyl)titanium(III) chloride" SYNLETT, no. 1, 1999, page 159, XP009113675 ISSN: 0936-5214
- FERNANDEZ-MATEOS A ET AL: "Radicals from Epoxides. Intramolecular Addition to Aldehyde and Ketone Carbonyls" ORGANIC LETTERS, vol. 1, no. 4, 26 August 1999 (1999-08-26), pages 607-609, XP009113676 ISSN: 1523-7060
- GANSAEUER A ET AL: "Emergence of a novel catalytic radical reaction: titanocene-catalyzed reductive opening of epoxides" JOURNAL OF THE AMERICAN CHEMICAL SOCIETY, vol. 120, no. 49, 24 November 1998 (1998-11-24), pages 12849-12859, XP001205392 ISSN: 0002-7863

**Description**

TECHNICAL FIELD

The present invention relates to the use of selected metal catalysts for ring-opening polymerization of epoxides.

BACKGROUND ART

As catalysts capable of increasing the ratio of primary terminal heteroatomic groups, here especially terminal hydroxyl groups of the polymer obtainable by ring-opening polymerization of a heterocyclic compound, tris(pentafluorophenyl)borane, tris(pentafluorophenyl)aluminum, tri(t-butyl)borane, and tris(t-butyl)aluminum are known (Japanese Patent No. 3076032).

However, even with such a catalyst, only polymers having primary functional groups in a ratio of about 70 % at best can be obtained, with the result that when used as starting materials for urethane foams, for instance, these polymers are deficient in the reactivity with isocyanates.

SUMMARY OF THE INVENTION

Starting therefrom, it is the object of the present invention to provide a metal catalyst which allows the production of a ring-opened polymer available from an epoxide as the main component and having primary terminal hydroxyl groups in a ratio exceeding 75 %.

After intensive studies for accomplishing the above object, the inventors of the present invention found that the ratio of primary terminal hydroxyl groups can be increased by using selected metal catalysts as stated in the following.

Accordingly, the present invention provides the use of

- tris-(3-methyltetrafluorophenyl)-borane,
- titanocene chloride,
- tetrakis-[2,4-di-(trifluoromethyl)-trifluorophenyl]-phosphine as a catalyst for a ring-opening polymerization of epoxides.

According to a preferred embodiment of the present invention, the epoxide is selected from a group consisting of propylene oxide, 1,2-butylene oxide, 3,4-butylene oxide, oxetane, 1,2-dichlorooxetane, 1,2-pentylene oxide, 1,2-hexylene oxide, tetrahydrofuran, styrene oxide, cyclohexene oxide, epichlorohydrin, epibromohydrin, methyl glycidyl ether, allyl glycidyl ether, and phenyl glycidyl ether.

According to an even more preferred embodiment of the present invention the epoxide is propylene oxide.

According to a specific embodiment of the present invention, the catalyst is tris-(3-methyltetrafluorophenyl)-borane; and the epoxide is 1,2-butylene oxide.

MORE DETAILED DISCLOSURE OF THE PRESENT INVENTION

The metal catalysts as proposed by the present invention can be easily obtained by the known synthetic technology. For example, tris(3-methyltetrafluorophenyl)borane and tetrakis(pentafluorophenyl)dichlorophosphine not concerned by the present invention, can be synthesized by the same method as the method for synthesis of tris(pentafluorophenyl)borane as disclosed in Japanese Kokai Publication Hei-06-247978, Japanese Kokai Publication Hei-08-253485, and Japanese Kokai Publication Hei-09-295984. Thus, the here concerned metal catalyst can be obtained by mixing the substituted phenyl magnesium bromide (substituted phenyl Grignard reagent) with MAn (M denotes the metal atom of the metal catalyst, A denotes a group which may leave on reaction with the Grignard reagent, such as chloro or bromo, and n denotes the number of mols of A).

Metallocene compounds containing cyclopentadiene as a ligand, such as titanocene chloride can be obtained by the same method as the method for synthesis described in Japanese Kokai Publication Hei-03-163,088, Japanese Kokai Publication Hei-03-188,092, and D. F. Bari, "Metallocenes '96", 27 (1996).

The metal catalyst as proposed by the present invention is very suitable, as a weakly cationic catalyst or a weakly anionic catalyst, for the ring-opening polymerization of heterocyclic compounds.

In conducting the ring-opening polymerization of a heterocyclic compound using a metal catalyst as proposed by the present invention, a promoter, such as a trialkylaluminum (e.g. triethylaluminum, or trimethylaluminum), or a trialkylamine (e.g. triethylamine) can be employed.

The level of use of the metal catalyst according to the present invention based on the weight of the substrate to be reacted is preferably 0.001 to 10 weight %, more preferred 0.001 to 1.0 weight %, and even still more preferred 0.005 to 0.5 weight %.

In the case where a promoter is used, the level of use of the promoter based on the weight of the metal catalyst is preferably 0.001 to 1.0 weight %, more preferred 0.001 to 0.5 weight %, and particularly preferred 0.005 to 0.1 weight %.

As examples of the epoxides to be reacted, the following compounds can be mentioned.

Propylene oxide, 1,2-butylene oxide, 3,4-butylene oxide, oxetane, 1,2-dichlorooxetane, 1,2-pentylene oxide, 1,2-hexylene oxide, tetrahydrofuran, styrene oxide, cyclohexene oxide, epichlorohydrin, epibromohydrin, methyl glycidyl ether, allyl glycidyl ether, and phenyl glycidyl ether.

Among these cyclic compounds, cyclic ethers, containing 3 to 6 carbon atoms being most preferred.

By means of the metal catalyst proposed by the present invention, the epoxide may also be caused to form an adduct compound with an active hydrogen-containing organic compound.

The active hydrogen-containing organic compound is not particularly restricted provided that it reacts with the heterocyclic compound to form a heterocyclic compound adduct, but may for example be an alcohol, an amine, or a carboxylic acid.

The adduct of the heterocyclic compound to such an active hydrogen-containing compound (initiator) can also be used as an initiator insofar as it retains active hydrogen.

The alcohol mentioned above includes monohydric alcohols, dihydric alcohols, and tri- or polyhydric alcohols.

The monohydric alcohol which can be used includes alcohols containing 1 to 20 (preferably 1 to 15, more preferably 5 to 15) carbon atoms, such as methanol, ethanol, n-propanol, butanol, 2-ethylhexyl alcohol, cyclohexanol, benzyl alcohol, and eicosyl alcohol, among others.

The dihydric alcohol includes alcohols containing 2 to 20 (preferably 2 to 10, more preferably 2 to 10) carbon atoms, such as ethylene glycol, propylene glycol, 1,4-butanediol, 1,6-hexanediol, diethylene glycol, neopentyl glycol, hexanediol, and eicosanediol, among others.

The trihydric alcohol includes alcohols containing 3 to 20 (preferably 3 to 15, more preferably 3 to 10) carbon atoms and those hydroxyl group-containing polymers which have weight average molecular weights between 100 and 1,000, such as glycerin, diglycerin, triglycerin, pentaglycerin, trimethylolpropane, dimethylolpropane, pentaerythritol, dipentaerythritol, sorbitan, sorbitol, fructose, and sucrose. In addition, polyvinyl alcohols having weight average molecular weights between 100 and 1,000 can be mentioned.

The amine includes ammonia, alkanolamines, aliphatic amines, aromatic amines, and heterocyclic amines.

The alkanolamine referred to just above includes alkanolamines containing 2 to 12 (preferably 2 to 8, more preferably 2 to 5) carbon atoms, such as monoethanolamine, diethanolamine, triethanolamine, monoisopropanolamine, and butanolamine, among others.

The aliphatic amine referred to above includes monoalkylamines containing 1 to 20 (preferably 1 to 10, more preferably 1 to 5) carbon atoms, dialkylamines containing 2 to 20 (preferably 2 to 10, more preferably 2 to 5) carbon atoms, and alkylenepolyamines containing 2 to 20 (preferably 2 to 10, more preferably 2 to 5) carbon atoms.

The monoalkylamine referred to just above includes methylamine, ethylamine, butylamine, 2-ethylhexylamine, octadecylamine, eicosylamine, and so on.

The dialkylamine includes dimethylamine, diethylamine, methylethylamine, 2-ethylhexylmethylamine, methyloctadecylamine, octadecylethylamine, and so on.

The alkylenepolyamine includes alkylenepolyamines containing 2 to 20 carbon atoms, such as ethylenediamine, hexamethylenediamine, octamethylenediamine, isophoronediamine, cyclohexylenediamine, diethylenetriamine, triethylenetetramine, and so on.

The aromatic amine includes arylamines, arylalkylamines, arylenepolyamines which contain 6 to 20 (preferably 6 to 15, more preferably 6 to 10) carbon atoms, and so on.

The arylamine referred to just above includes aniline, N-methylaniline, o-toluidine, m-toluidine, N-ethyltoluidine, p-toluylamine, 2,3-xylinoamine, 2,4-xylinoamine, diphenylamine, methylphenylamine, ethylphenylamine, di-o-toluylamine, and phenyltoluylamine.

The arylalkylamine includes benzylamine, benzylmethylamine, o-toluylmethylamine, and so on.

The arylenepolyamine includes phenylenediamine, diaminotoluene, xylylenediamine, methylenedianiline, diphenyl ether diamine, and so on.

The heterocyclic amine which can be used includes heterocyclic amines containing 5 to 20 carbon atoms, such as aminoethylpiperazine and the heterocyclic amines described in Japanese Kokoku Publication Sho-55-21044.

The carboxylic acid which can be used includes aliphatic carboxylic acids, aromatic carboxylic acids, and so on.

The aliphatic carboxylic acid referred to just above includes monocarboxylic acids, dicarboxylic acids, polycarboxylic acids, and the like.

The aliphatic monocarboxylic acid referred to just above includes monocarboxylic acids containing 1 to 20 (preferably 1 to 10, more preferably 1 to 5) carbon atoms, such as formic acid, acetic acid, propionic acid, octanoic acid, 2-ethylhexanoic acid, octadecanoic acid, and eicosanoic acid, among others.

The aliphatic dicarboxylic acid which can be used includes dicarboxylic acids containing 2 to 30 (preferably 2 to 15, more preferably 2 to 10) carbon atoms, such as oxalic acid, succinic acid, adipic acid, sebacic acid, maleic acid, and so on.

The aliphatic polycarboxylic acid which can be used includes polycarboxylic acids containing 6 to 30 (preferably 6 to 20, more preferably 6 to 15) carbon atoms. For example, there can be mentioned hexanetricarboxylic acid, octanetricarboxylic acid, hexanetetracarboxylic acid, and the like. Aside from these, poly(meth)acrylic acid, polymaleic acid, methacrylic acid-maleic acid copolymer, and methyl methacrylate-(meth)acrylic acid copolymer, within the weight average molecular weight range of 100 to 2,000, can be mentioned.

The aromatic carboxylic acid which can be used includes monocarboxylic acids, dicarboxylic acids, and polycarboxylic acids.

The aromatic monocarboxylic acid referred to just above includes monocarboxylic acids containing 7 to 20 (preferably 7 to 15, more preferably 7 to 10) carbon atoms, such as benzoic acid, 4-methylbenzoic acid, 2,3,4-trichlorobenzoic acid, and naphthalenecarboxylic acid, among others.

The aromatic dicarboxylic acid includes dicarboxylic acids containing 7 to 30 (preferably 7 to 20, more preferably 7 to 15) carbon atoms, such as phthalic acid, terephthalic acid, trichlorobenzenedicarboxylic acid, m-toluenedicarboxylic acid, and naphthalenedicarboxylic acid, among others.

The aromatic polycarboxylic acid which can be used includes polycarboxylic acids containing 7 to 30 (preferably 7 to 20, more preferably 7 to 15) carbon atoms, such as trimellitic acid, 1,2,4,5-benzenetetracarboxylic acid, benzenehexacarboxylic acid, and naphthalenetetracarboxylic acid, among others. Aside from these, poly(4-carboxystyrene) having a weight average molecular weight of 15 to 2,000, among others, can also be mentioned.

As the adduct compound obtainable by addition of the heterocyclic compound to such an active hydrogen-containing compound (initiator), there can be used polyalkylene glycols, alcohol-alkylene oxide adducts, carboxylic acid-alkylene oxide adducts, and amine-alkylene oxide adducts, among others.

The polyalkylene glycol which can be used includes glycols within the weight average molecular weight range of 88 to 3,000, such as diethylene glycol, triethylene glycol, dipropylene glycol, polyoxyethylene glycol, polyoxypropylene glycol, polyoxyethylene-polyoxypropylene glycol (oxyethylene/oxypropylene: weight ratio 10/90, block), polyoxyethylene-polyoxybutylene glycol (oxyethylene/oxybutylene: weight ratio 50/50, random), and the like.

The alcohol-alkylene oxide adduct includes methanol polyethylene oxide adduct, methanol polypropylene oxide adduct, ethanol polyethylene oxide adduct, ethanol polypropylene oxide adduct, propyl alcohol polyethylene oxide adduct, propyl alcohol polypropylene oxide adduct, glycerin polyethylene oxide adduct, glycerin polypropylene oxide adduct, and the like.

The carboxylic acid-alkylene oxide adduct includes 2-hydroxyethyl (meth)acrylate, 2-hydroxypropyl (meth)acrylate, formic acid polyethylene oxide adduct, formic acid polypropylene oxide adduct, 2-ethylhexanoic acid polyethylene oxide adduct, 2-ethylhexanoic acid polypropylene oxide adduct, oxalic acid polyethylene oxide adduct, oxalic acid polypropylene oxide adduct, and the like.

These active hydrogen-containing compounds can be used optionally in a combination of two or more species.

In conducting a ring-opening addition reaction using the catalyst as proposed by the present invention, a solvent may be used where necessary.

As the solvent, any of those solvents which are used for conventional ring-opening addition reactions can be utilized as it is.

When a solvent is used, its level of use based on the weight of the heterocyclic compound to be reacted is preferably 10 to 80 weight %, more preferred 30 to 60 weight %, and even still more preferred 40 to 50 weight %.

The reaction temperature is preferably 0 to 100°C, more preferred 20 to 90°C, and even still more preferred 40 to 80°C.

The reaction pressure is preferably 10 to 100 Pa, more preferred 20 to 80 Pa, and even still more preferred 20 to 50 Pa.

The ring-poenrng addition reaction in the presence of the catalyst as proposed by the present invention can be carried out in the same manner as the conventional ring-opening addition reaction. Thus, there can be mentioned (1) the method in which the heterocyclic compound is added portionwise to a mixture (prepared to take the reaction temperature in advance) of the active hydrogen-containing organic compound, the catalyst as proposed by the present invention, and the solvent to be used where necessary for ring-opening addition reaction, (2) the method in which the heterocyclic compound, the active hydrogen-containing organic compound, the catalyst and the solvent to be used where necessary are admixed in one operation and adjusted to the reaction temperature, and (3) the method in which the active hydrogen-containing organic compound obtained by the above method (1) or (2) is retained in the reaction vessel and a different kind of heterocyclic compound is further introduced for ring-opening addition reaction.

Furthermore, after the ring-opening addition reaction, the catalyst can be removed by adsorption with an adsorbent (for example, activated clay, zeolite, synthetic zeolite, an ion exchange resin, or the like) or filtration, and the reaction mixture may be neutralized with, for example, a mineral acid, an organic acid, an amine, or an alkali metal hydroxide.

The heterocyclic compound ring-opened polymer produced by using the catalyst as proposed by the present invention has a high ratio of primary terminal hydroxyl groups (not less than 75% or even 80% or higher), so that, when used as a starting material to be reacted with another starting material, it exhibits high reactivity to give a product having desired properties with greater certainty. Therefore, the polymer is of great use particularly as a raw material of various derivatives such as polymer dispersion polyols, isocyanato-terminated prepolymers, polyurethane resins, polyoxyalkylenepolyamines, and polyurethaneurea resins using said polyoxyalkylenepolyamines as raw materials.

The ratio of primary functional groups means the percentage of primary functional groups (functional groups directly attached to methylene groups) based on the total terminal functionality of the ring-opened polymer. Taking propylene oxide as an example of said heterocyclic compound, the ratio of primary functional groups means the percentage (mol %) of the primary hydroxyl group {-CH(CH$_3$)CH$_2$OH} based on the total terminal hydroxyl function of the ring-opened polymer.

The ratio of primary terminal hydroxyl groups can be calculated by $^1$H-NMR analysis, after the pretreatment esterification of a sample. Thus, the percentage of the section containing the methylene group attached to the primary terminal hydroxyl group of the ring-opened polymer relative to the sum of the section containing the methylene group attached to the primary terminal hydroxyl group and the section containing the methyne group attached to the secondary terminal hydroxyl group of the ring-opened polymer is determined by $^1$H-NMR spectrum analysis and the result is taken as the ratio of primary terminal hydroxyl groups.

The metal catalyst as proposed by the present invention is so high in reaction activity that a reaction can be sufficiently realized at a comparatively low temperature (40 to 80°C) with a small catalyst amount (30 to 100 pm) to give a ring-opened polymer with a narrow molecular weight distribution.

When the thus obtained ring-opened polymer is further allowed to the ring-opening polymerization of ethylene oxide, the proportion of primary functional groups (primary hydroxyl groups) can be easily increased to at least 80% or even at least 95%. Moreover, by causing ethylene oxide to undergo ring-opening polymerization in a proportion of 1 to 10 units (preferably 2 to 6 units, more preferably 2 to 5 units) per unit of the terminal functional group of the thus obtained ring-opened polymer it is possible to obtain an ring-opened polymer containing primary hydroxyl groups in a proportion of as high as not less than 80% or even 95% or higher and, as determined by the method of Oda (R. Oda & K. Teramura, Kaimenkassei-zai no Gosei to Sono Oyo (Synthesis of Surfactants and Its Application), p.501, Maki Shoten; Takehiko Fujimoto, Shin Kaimenkassei-zai Nyumon (New Introduction to Surfactants), p.197, published by Sanyo Chemical Industries, Ltd.), having a hydrophile-lipophile balance (HLB) number of 4 to 7. The ring-opened polymer having such a structure exhibits unusually high reactivity with isocyanates when used, as it is, as a raw material for urethane foams and features a low deflection set by constant compression under moist and hot condition.

BEST MODE FOR CARRYING OUT THE PRESENT INVENTION

The following examples illustrate the present invention in further detail without defining the scope of the invention. In the following description, all "parts" and "percents" represent weight parts and weight %, respectively.

Example 1:

A stainless steel autoclave equipped with stirring and temperature control functions was charged with 1,000 parts of polypropylene glycol (weight average molecular weight 1,000, 1 mol part) and 0.01 parts of tris(3-methyltetrafluorophenyl borane, which is one of the organometal catalysts the use thereof is provided by the present invention. After substitution in the system by nitrogen, the system was dehydrated under reduced pressure (about 20 mmHg) at 120°C for 1 hour.

Then, 290 parts (5 mol parts) of propylene oxide was introduced under a constant gauge pressure of 1 to 3 kgf/cm$^2$ at 60°C and, thereafter, the mixture was subjected to maturing reaction at 60°C for one hour.

To this reaction mixture was added 3 parts of an adsorbent (Kyowaad™ 1000, product of Kyowa Chemical Industry Co., Ltd.) for adsorbing the catalyst at 90°C, followed by filtering to give a propylene oxide ring-opened polymer (I).

The ratio of primary functional groups in the open ring polymer (I) as determined by $^1$H-NMR spectrum analysis was 80%.

Example 2:

Except that titanocene chloride was used in lieu of tris(3-methyltetrafluorophenyl)borane as used in Example 1, the procedure of Example 1 was repeated to give a heterocyclic compound ring-opened polymer (II).

The ratio of primary functional groups in the ring-opened polymer (II) as determined by $^1$H-NMR spectrum analysis was 89%.

Example 3:

Except that 62.1 parts (1 mol part) of diethylene glycol was used in lieu of 1,000 parts of polypropylene glycol as used in Example 2, the procedure of Example 2 was repeated to give a heterocyclic compound ring-opened polymer (III) .

The ratio of primary functional groups in the ring-opened polymer (III) as determined by $^1$H-NMR spectrum analysis was 88%.

Example 4:

Except that tetrakis[2,4-di(trifluoromethyl)trifluorophenyl]phosphine was used in lieu of tris(3-methyltetrafluorophenyl)borane as used in Example 1, the procedure of Example 1 was repeated to give a heterocyclic compound ring-opened polymer (IV).

The ratio of primary functional groups in the ring-opened polymer (IV) as determined by $^1$H-NMR spectrum analysis was 95%.

Example 5:

Except that 1,2-butylene oxide was used in lieu of propylene oxide as used in Example 1, the procedure of Example 1 was repeated to give a heterocyclic compound ring-opened polymer (V).

The ratio of primary functional groups in the ring-opened polymer (V) as determined by $^1$H-NMR spectrum analysis was 82%.

Comparative Example 1:

A stainless steel autoclave equipped with stirring and temperature control functions was charged with 1,000 parts of polypropylene glycol (weight average molecular weight 1,000, 1 mol part) and 0.01 parts of tris(pentafluorophenyl) borane, and after substitution in the system by nitrogen, the system was dehydrated under reduced pressure (about 20 mmHg) at 120°C for 1 hour.

Then, 290 parts (5 mol parts) of propylene oxide was introduced under a constant gauge pressure of 1 to 3 kgf/cm$^2$ at 60°C and the system was subjected to maturing reaction at 60°C for 1 hour.

To this reaction mixture was added 3 parts of an adsorbent (Kyowaad™ 1000, product of Kyowa Chemical Industry Co., Ltd.) for adsorbing the catalyst at 90°C, followed by filtering to give a heterocyclic compound ring-opened polymer (VI).

The ratio of primary functional groups in the ring-opened polymer (VI) as determined by $^1$H-NMR spectrum analysis was 73%.

Comparative Example 2:

Except that 0.03 parts of tris(t-butyl)boron was used in lieu of tris(pentafluorophenyl)borane as used in Comparative Example 1, the procedure of Comparative Example 1 was repeated to give a heterocyclic compound ring-opened polymer (VII).

The ratio of primary functional groups in the ring-opened polymer (VII) as determined by $^1$H-NMR spectrum analysis was 69%.

Comparative Example 3:

Except that 1,2-butylene oxide was used in lieu of propylene oxide as used in Comparative Example 1, the procedure of Comparative Example 1 was repeated to give a heterocyclic compound ring-opened polymer (VIII).

The ratio of primary functional groups in the ring-opened polymer (VIII) as determined by $^1$H-NMR spectrum analysis was 70%.

Method for determination of the ratio of primary terminal hydroxy groups

Sample preparation: About 30 mg of the material to be analyzed was weighed out into a 5 mm-diameter $^1$H-NMR sample tube and dissolved by adding about 0.5 ml of a deuterated solvent. Then, about 0.1 ml of trifluoroacetic anhydride was added to the solution and the mixture was allowed to stand at 25°C for about 5 minutes. The resulting trifluoroacetic acid ester was used as a sample for analysis.

The deuterated solvent mentioned above means deuterated chloroform, deuterated toluene, deuterated dimethyl sulfoxide, deuterated dimethylformamide, or the like and, among these, a solvent capable of dissolving the sample was selected.

Determination of the ratio of primary terminal hydroxyl group: NMR spectrum analysis: a $^1$H-NMR spectrum was recorded under the conventional conditions.

The signal assignable to methylene attached to primary hydroxyl is observed at about 4.3 ppm and the signal assignable to methyne attached to secondary hydroxyl appears at about 5.2 ppm. Therefore, the ratio (%) of primary terminal hydroxyl groups is calculated by means of the following equation.

```
(the ratio (%) of primary terminal hydroxyl groups) =
[a/(a + 2 x b )] x 100
```

a: the integrated signal value assignable to methylene attached to primary hydroxyl at about 4.3 ppm.
b: the integrated signal assignable to methyne attached to secondary hydroxyl at about 5.2 ppm.

**Table 1:**

|  |  | Metal catalyst (Catalyst amount: mmol/g) | Initiator | Epoxide to be reacted | Ratio of primary functional group |
|---|---|---|---|---|---|
| Example | 1 | Tris-(3-methyltetrafluoro-phenyl)-borane (0.002) | Polypropylene glycol (Mw 1.000) | Propylene oxide | 80 % |
|  | 2 | Titanocene chloride (0.010) | Polypropylene glycol (Mw 1,000) | Propylene oxide | 89 % |
|  | 3 | Titanocene chloride (0.010) | Diethylene glycol | Propylene oxide | 88 % |
|  | 4 | Tetrakis-[2,4-di(trifluoromethyl)-trifluorophenyl] phosphine (0.011) | Polypropylene glycol (Mw 1.000) | Propylene oxide | 95 % |
|  | 5 | Tris-(3-methyltetrafluoro-phenyl)-borane (0.005) | Polypropylene glycol (Mw 1,000) | 1,2-Butylene oxide | 82 % |
| Comparative Example | 1 | Tris(pentafluorophenyl)-borane (0.002) | Polypropylene glycol (Mw 1,000) | Propylene oxide | 73 % |
|  | 2 | Tris(t-butyl)borane (0.013) | Polypropylene glycol (Mw 1,000) | Propylene oxide | 69 % |
|  | 3 | Tris(pentafluorophenyl) borane (0.002) | Polypropylene glycol (Mw 1,000) | 1,2-Butylene oxide | 70 % |

In the Table, Mw stands for weight average molecular weight as determined by gel permeation chromatography.

The catalyst amount is expressed in the amount (mmol) of the catalyst per gram of the epoxide to be reacted.

INDUSTRIAL APPLICABILITY

The ring-opened polymer of a heterocyclic compound as produced in the presence of the selected catalyst the use thereof is provided by the present invention has an unusually high ratio of primary terminal hydroxyl groups so that, when used as a starting material to be reacted with a different material, it exhibits high reactivity to give a product having desired physical properties with greater certainty. Therefore, the thus prepared polymer is of great use as a raw material for various derivatives such as polymer dispersion polyols, isocyanato-terminated prepolymers, polyurethane resins, raw materials for polyurethane foams, and polyurethaneurea resins made from polyoxyalkylenepolyamines.

**Claims**

1.  Use of

    - tris-(3-methyltetrafluorophenyl)-borane,
    - titanocene chloride, or
    - tetrakis-[2,4-di-(trifluoromethyl)-trifluorophenyl]-phosphine

    as a catalyst for a ring-opening polymerization of epoxides.

2.  Use according to Claim 1,
    **wherein**
    the epoxide is selected from a group consisting of propylene oxide, 1,2-butylene oxide, 3,4-butylene oxide, oxetane, 1,2-dichlorooxetane, 1,2-pentylene oxide, 1,2-hexylene oxide, tetrahydrofuran, styrene oxide, cyclohexene oxide, epichlorohydrin, epibromohydrin, methyl glycidyl ether, allyl glycidyl ether, and phenyl glycidyl ether.

3.  Use according to Claim 1,
    **wherein**
    the epoxide is propylene oxide.

4.  Use according to Claim 1,
    **wherein**
    the catalyst is tris-(3-methyltetrafluorophenyl)-borane; and
    the epoxide is 1,2-butylene oxide.

**Patentansprüche**

1.  Verwendung von

    - Tris-(3-methyltetrafluorophenyl)-boran,
    - Titanocenchlorid, oder
    - Tetrakis-[2,4-di-(trifluoromethyl)-trifluorophenyl]-phosphin

    als einen Katalysator für eine ringöffnende Polymerisation von Expoxiden.

2.  Verwendung nach Anspruch 1,
    **dadurch gekennzeichnet, dass**
    das Expoxid ausgewählt ist aus einer Gruppe von Verbindungen, die umfasst:

    1,2-Epoxypropan (= Propylenoxid),
    1,2-Expoxybutan (= 1,2-Butenoxid),
    3,4-Expoxybutan (= 3,4-Butenoxid),
    Trimethylenoxid (= Oxetan, 1,3 Propylenoxid),
    1,2-Dichlor-trimethylenoxid (= 1,2-Dichloroxetan),
    1,2-Epoxypentan (=1,2-Pentenoxid),
    1,2-Epoxyhexan (= 1,2-Hexenoxid),
    Tetrahydrofuran,

Phenylethylenoxid (= Epoxyethyl-benzol, Styroloxid),
1,2-Epoxy-cyclohexan (=Cyclohexenoxid),
Epichlorhydrin (= 1-Chlor-2,3-epoxypropan),
Epibromhydrin (= 1-Brom-2,3-epoxypropan),
Glycidyl-methylether (= Methyl-glycidylether),
Allyl-glycidylether (= Allyl-2,3-epoxy-propylether) und
Phenyl-glycidether (= 2,3-Epoxypropyl-phenylether).

**3.** Verwendung nach Anspruch 1,
**dadurch gekennzeichnet, dass**
das Epoxid 1,2-Epoxypropan (= Propylenoxid) ist.

**4.** Verwendung nach Anspruch 1,
**dadurch gekennzeichnet, dass**
der Katalysator Tris-(3-methyltetrafluorophenyl)-boran ist; und das Epoxid 1,2-Epoxybutan (= 1,2-Butenoxid) ist.

**Revendications**

**1.** L'utilisation de

- tris-(3-méthyl-tetrafluorophényl)-borane,
- chlorure de titanocène, ou
- tetrakis-[2,4-di-( trifluorométhyl)-trifluorophényl]-phosphine

en tant que catalyseur de polymérisation par ouverture de cycle d'époxydes.

**2.** L'utilisation conformément à la revendication 1,
**caractérisée en ce que**
1,2 époxypropane (= oxyde de 1,2-propylène),
1,2 époxybutane (= oxyde de 1,2-butène),
3,4 époxybutane (= oxyde de 3,4-butène),
oxyde de triméthylène (= oxétane, oxyde de 1,3-propylène),
oxyde de 1,2-dichloro-triméthylène (= 1,2-dichlorooxétane),
1,2 époxypentane (= oxyde de 1,2-pentène),
1,2 époxyhexane (= oxyde de 1,2-hexane),
tetrahydrofurane,
oxyde de phényléthylène (= (époxyéthyl)benzène, oxyde de styrène),
1,2-époxy-cyclohexène (= oxyde de cyclohexène),
épichlorohydrine (= 1-chloro-2,3-époxypropane),
épibromhydrine (= 1-bromo-2,3-époxypropane),
éther de méthyle et de glycidyle (= méthyl-glycidyléther),
éther de glycidyle et d'allyle (= allyl-2,3-époxy-propyléther), et
éther de glycidyle et de phényle (= 2,3-époxypropyl-phényléther).

**3.** L'utilisation conformément à la revendication 1,
**caractérisée en ce que**
l'époxyde est le 1,2 époxypropane (= oxyde de propylène).

**4.** L'utilisation conformément à la revendication 1,
**caractérisée en ce que**
le catalyseur est le tris-(3-méthyl-tetrafluorophényl)-borane et que l'époxyde est le 1,2-époxybutane (= oxyde de 1,2-butène).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3076032 B
- JP HEI06247978 A
- JP HEI08253485 A
- JP HEI09295984 A
- JP HEI03163088 B
- JP HEI03188092 A
- JP SHO5521044 B

### Non-patent literature cited in the description

- **D. F. Bari.** *Metallocenes '96,* 1996, 27